Europäisches Patentamt

(19) European Patent Office

Office européen des brevets

(11) EP 0 671 235 B1

## (12) EUROPEAN PATENT SPECIFICATION

(45) Date of publication and mention
of the grant of the patent:
**20.05.1998 Bulletin 1998/21**

(21) Application number: 94922380.4

(22) Date of filing: 16.08.1994

(51) Int. Cl.$^6$: **B23H 1/02**, B23H 7/04

(86) International application number:
**PCT/JP94/01355**

(87) International publication number:
**WO 95/06536 (09.03.1995 Gazette 1995/11)**

(54) **POWER SOURCE APPARATUS FOR ELECTRICAL DISCHARGE MACHINING**

STROMVERSORGUNG FÜR ELEKTRISCHES ENTLADUNGSWERKZEUG

DISPOSITIF RACCORDE A DES SOURCES D'ALIMENTATION EN COURANT POUR USINAGE
PAR ETINCELAGE

(84) Designated Contracting States:
**CH DE LI**

(30) Priority: **01.09.1993 JP 239266/93**

(43) Date of publication of application:
**13.09.1995 Bulletin 1995/37**

(73) Proprietor: **FANUC LTD.**
**Minamitsuru-gun, Yamanashi 401-05 (JP)**

(72) Inventors:
• **IZUMIYA, Syunzo**
**Yamanashi 403 (JP)**
• **MURAI, Masao**
**Fanuc Manshonharimomi**
**Room 10-103**
**Yamanashi 401-05 (JP)**

• **SAKURAI, Akihiro**
**Fanuc Dai-3 Vira-karamatsu**
**Yamanashi 401-05 (JP)**
• **KAWAHARA, Akiyoshi**
**Fanuc Manshonharimomi**
**Rm 6-110**
**Yamanashi 401-05 (JP)**

(74) Representative:
**Billington, Lawrence Emlyn et al**
**Haseltine Lake & Co.,**
**Imperial House,**
**15-19 Kingsway**
**London WC2B 6UD (GB)**

(56) References cited:
**JP-A- 1 257 514        JP-A- 3 092 220**
**JP-A- 3 104 517**

## Description

The present invention relates to a power supply apparatus for, by way of example, a wire-cut electric discharge machine or an engraving electric discharge machine, and more particularly to a power supply apparatus for an electric discharge machine, which is capable of switching from a sub-power source to a main power source by detecting the start of an electric discharge between electrodes.

There is known a power supply apparatus having a main power source and a sub-power source for an electric discharge machine which performs a wire-cut electric discharge machining or an engraving electric discharge machining by applying a voltage between an electrically conductive workpiece and a machining electrode. The sub-power source supplies a voltage for starting electric discharge between the electrodes, and is switched to the main power source immediately after electric discharge is started between the electrodes.

Example of this type of power supply apparatus can be found in JP-A-3-104517, JP-A-3-92220 and JP-A-1-257514.

In order to control the changeover of the power sources precisely, it is necessary to accurately detect the point of time when the electric discharge is started after an increase of the interelectrode voltage. For this purpose, in a conventional method, it is concluded that electric discharge has started when a drop of the interelectrode voltage below a predetermined voltage level is detected. The detection level is set to be a little higher than the interelectrode voltage for the electric discharge. Conventionally, the above detection level has also been used for detecting the rise of the interelectrode voltage for judging whether or not the insulation between the electrodes has been adequately recovered.

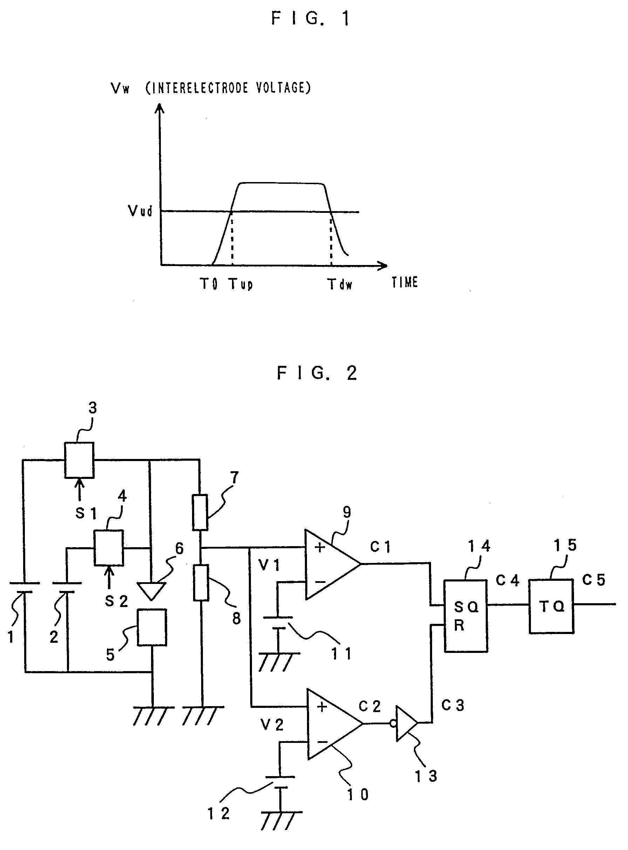

There is a considerable time delay before the applied voltage appears between the electrodes due to the capacity of the circuit, etc. Thus, the relation between the transition of an interelectrode voltage Vw and a detection level Vud after the start of voltage application by means of the sub-power source in the conventional power supply apparatus is such as the one shown in FIG. 1. The interelectrode voltage Vw starts to rise from point T0 at which the voltage of sub-power source is applied, and is detected at point Tup when it exceeds the predetermined level Vud. Thereafter, an electric discharge is generated between the electrodes to cause voltage drop. When the voltage drops below the detection level Vud at point Tdw, it is concluded that the electric discharge has started, and an electric discharge detection signal is outputted.

In the case where the recovery of insulation between the electrodes is unsatisfactory before the start of the electric discharge, the interelectrode voltage Vw will not increase adequately after the application of the sub-power source voltage nor reach the detection level Vud. Accordingly, no electric discharge detection signal is outputted, so that the sub-power source is not switched to the main power source. This will sometimes cause reduction of the machining speed or roughening of the work surface.

In order to avoid such a situation, there is adopted a power supply control method, which differs from the method in normal situation, in which the sub-power source voltage is applied once again after discontinuing the application of the sub-power source voltage when the electric discharge start signal is not outputted within a certain period of time after applying sub-power source voltage. Conventionally, however, a common detection level Vud is set to the interelectrode voltage level as a reference for judging the degree of recovery of the interelectrode insulation, and to the interelectrode voltage as a reference for detecting the start of electric discharge, and any idea for setting separate references for these voltage levels has never been proposed.

According to the prior art, as described above, the only one set value Vud is used as a detection level for detecting the recovery of the insulation when the voltage rises between the electrodes after the application of the sub-power source voltage, and as a detection level for detecting the start of electric discharge when the voltage drops between the electrodes, and this has been causing the following problems.

In the case where the detection level Vud is set considerably below the sub-power source voltage so as to detect the start of electric discharge, if the interelectrode voltage becomes higher than the set value Vud even when the rise of interelectrode voltage after the application of the sub-power source voltage is inadequate, any following drop of the interelectrode voltage will be misjudged as being the start of normal electric discharge to cause the output of the electric discharge start signal and subsequent switching of power source to the main power source.

On the other hand, in the case where the detection level Vud is set to be a little lower than the sub-power source voltage to determine whether or not the recovery of insulation is satisfactory, a voltage drop due to a minor fluctuation of the voltage at the time of the sub-power source voltage application or an interelectrode leak may possibly be detected as being the start of normal electric discharge.

Thus, according to the prior art, it is extremely difficult to surely detect the start of normal electric discharge after the interelectrode voltage is adequately increased by the application of the sub-power source voltage.

An object of the present invention is to provide a power supply apparatus for an electric discharge machine, capable of surely detecting the start of normal electric discharge after an interelectrode voltage is fully increased by the application of a sub-power source voltage, and surely switching a sub-power source voltage to a main power source.

A power supply apparatus for an electric discharge machine according to the present invention has the fundamental arrangement of a conventional power supply apparatus, comprising a main power source for applying a machining voltage between electrodes, a sub-power source for applying an electric discharge starting voltage between the electrodes, an electric discharge start detecting circuit for detecting the start of electric discharge caused between the electrodes and outputting an electric discharge start detection signal, and a power source switching circuit for switching voltage application by means of the sub-power source over to voltage application by means of the main power source in response to the electric discharge start detection signal, and in which, the reliability of the operation for switching the main power source to the sub-power source is greatly improved by incorporating a technical idea peculiar to the present invention into the above arrangement of the electric discharge start detecting circuit.

More specifically, the electric discharge start detecting circuit of the power supply apparatus according to the present invention includes interelectrode voltage increase detecting means for detecting that the interelectrode voltage has become higher than a preset first detection level as a result of the voltage application from the sub-power source, interelectrode voltage drop detecting means for detecting that the interelectrode voltage has become lower than a second detection level set to a level different from that of the first detection level, and means for outputting an electric discharge detection signal to the power source switching circuit when it is detected by the interelectrode voltage drop detecting means that the interelectrode voltage has become lower than the second detection level after it is detected by the interelectrode voltage increase detecting means that the interelectrode voltage has become higher than the first detection level.

By adopting the above arrangement, the first detection level for judging the state of recovery of insulation at the time of the sub-power source voltage application and the second detection level for judging the start of later electric discharge by the drop of the interelectrode voltage can be set separately at values conforming to their respective objects of judgment. The switching of the sub-power source voltage over to the main power source is carried out when it is concluded at the first detection level that the state of recovery of insulation at the time of the sub-power source voltage application is satisfactory and the start of electric discharge is detected by at the second detection level, so that the reliability of the power supply switching operation is very high.

Moreover, a development of the present invention proposes that one or both of the first and second detection levels be variable. Thus, a criterion for the discrimination of the state of recovery of insulation at the time of the sub-power source voltage application and a criterion for the judgment of the start of electric discharge can freely be changed depending on the variation of machining conditions and the like. In the conventional apparatus, the detection levels are correlated with two judging conditions for two different purposes, so that it is hard to effectively adjust the detection levels corresponding to the machining conditions. In consideration of this fact, a great advantage can be enjoyed by separately setting the variable detection levels.

Brief Description of the Drawings

FIG. 1 is a graph showing the relationship between the transition of the interelectrode voltage and the detection level after the start of voltage application by a sub-power source in a conventional power supply apparatus;
FIG. 2 is a block diagram showing a principal part of the arrangement of a power supply apparatus according to one embodiment of the present invention; and
FIG. 3 is a time chart illustrating the operation of the power supply apparatus shown in FIG. 2.

Referring to FIG. 2, a machining voltage from a main power supply unit or an electric discharge starting voltage from a sub-power supply unit is applied between a workpiece 5 as one electrode, and a machining electrode 6 as the other electrode. The main power supply unit includes a DC main power source 2 for supplying the machining voltage and a switching device 4 for connecting and disconnecting voltage supply from the main power source 2, while the sub-power supply unit includes a DC sub-power source 1 for supplying the machining start voltage and a switching device 3 for connecting and disconnecting voltage supply from the sub-power source 1.

The switching devices 3 and 4 are each composed of a semiconductor switching device, such as FET, and are turned on when they receive a sub-power source voltage application signal S1 and a main supply voltage application signal S2 from a control unit (not shown) of an electric discharge machine, respectively. The sub-power source voltage application signal S1 and the main power supply voltage application signal S2 are not provided simultaneously. Before the start of electric discharge, the sub-power source voltage application signal S1 is delivered to the switching device 3. After the start of the electric discharge between the electrodes is detected, the sub-power source voltage application signal S1 is stopped, and the main power source voltage application signal S2 is outputted to the switching device 4, instead.

The following is a description of an arrangement of an electric discharge start detecting circuit.

Voltage dividing resistors 7 and 8 divide an interelectrode voltage Vw at a suitable voltage dividing ratio 1:r (r < 1). Accordingly, the interelectrode voltage Vw and a voltage Vwd obtained by being divided by means of the voltage dividing resistors 7 and 8 have a relation of $Vwd = rVw$. The divided voltage Vwd is applied to one terminal of the first comparator 9 for detecting that the interelectrode voltage has exceeded the first detection level Vd1 by the voltage supply from of the sub-power supply unit 1, and also applied to one terminal of the second comparator 10 for detecting that the interelectrode voltage has dropped below the second detection level Vd2 by the start of electric discharge.

The other input terminal of the first comparator 9 is supplied with a first reference voltage V1 from a DC power source 11, which is compared with the divided voltage Vwd, and the other input terminal of the second comparator 10 is supplied with a second reference voltage V2 from a DC power source 12.

The first reference voltage V1 is set corresponding to the first detection level Vd1 for detecting that the interelectrode voltage has been sufficiently raised by the application of the sub-power source voltage, and is given by the relationship of $V1 = rVd1$. In order to output the interelectrode voltage increase detection signal only when the recovery of insulation between the electrodes is sufficient enough to ensure a satisfactory increase of the interelectrode voltage, it is necessary to set the first detection level Vd1 slightly lower than the voltage Vs1 of the sub-power source. Thus, the first detection level Vd1 is expressed as $Vd1 = Vs1 - \delta$ ($\delta$ is a relatively small positive voltage value), and the reference voltage V1 is given as $V1 = rVd1 = r(Vs1 - \delta)$.

With the reference voltage V1 set in this manner, an output C1 of the comparator 9 changes from a low level to a high level when the interelectrode voltage Vw exceeds the first detection level Vd1 which is a little lower than the sub-power source voltage Vs1.

The second reference voltage V2 is set corresponding to the second detection level Vd2 for detecting that the interelectrode voltage Vw has sufficiently dropped by the start of the electric discharge between the electrodes, and is given as $V2 = rVd2$. In order to output an interelectrode voltage drop detection signal only in the case where the electric discharge is surely started to ensure a satisfactory drop of the interelectrode voltage, the second detection level Vd2 should be adjusted to a level a little higher than a steady-state voltage Vch in electric discharge. Thus, the second detection level Vd2 is expressed as $Vd2 = Vch - \varepsilon$ ($\varepsilon$ is a relatively small positive voltage value), and the reference voltage V2 is given by $V2 = rVd1 = r(Vch + \varepsilon)$.

There is a relation $Vd1 > Vd2$ between the first detection level Vd1 and the second detection level Vd2, so that $V1 > V2$ is obtained correspondingly.

With the reference voltage V2 set in this manner, an output C2 of the comparator 9 changes from the high level to the low level when the interelectrode voltage Vw drops below the second detection level Vd2 which is set a little higher than the steady-state voltage Vch for electric discharge. The output C2 of the comparator 10 is inverted to C3 by means of an inverter 13, and is inputted together with the output C1 of the comparator 9, to SR flip-flop 14.

The SR flip-flop 14 is set when C1 becomes a high level, and is reset when C3 becomes high level. That is, an output C4 of the SR flip-flop 14 rises to a high level when the interelectrode voltage exceeds the first detection level Vd1 which is set a little lower than the sub-power source voltage Vs1, and goes low when the interelectrode voltage drops below the second detection level which is set a little higher than the steady-state voltage Vch for electric discharge.

A monostable multivibrator 15 detects the trailing edge of the output C4 of the SR flip-flop 14, and generates a pulse output C5 with a fixed duration. The output C5 from the monostable multivibrator 15 is delivered as an electric discharge start detection signal to the control unit.

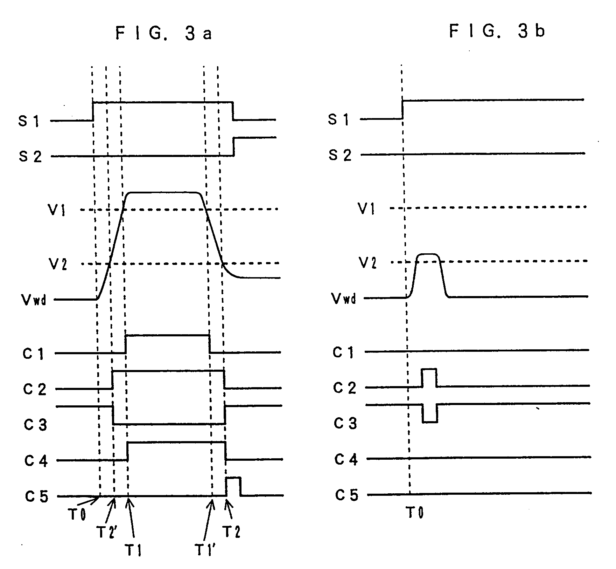

FIG. 3a shows transitions of the individual signals S1, S2 and C1 to C5 and the divided voltage Vwd observed in the case where the recovery of insulation between the electrodes is satisfactory while the sub-power source voltage is applied, and FIG. 3b shows transitions of the individual signals S1, S2 and C1 to C5 and the divided voltage Vwd in the case where the recovery of insulation between the electrodes is unsatisfactory.

When the sub-power source voltage application signal S1 is delivered from a control circuit to the switching device 3 to turn on the same, the interelectrode voltage Vw and the divided voltage Vwd start to increase (at time T0).

If the recovery of insulation between the electrodes is satisfactory, the interelectrode voltage Vw exceeds the second detection level Vd2 at time T2', and then increases beyond the first detection level Vd1 to a value substantially equal to the sub-power source voltage Vs1 at time T1. As shown in FIG. 3a, therefore, the divided voltage Vwd exceeds the reference voltage V2, which is set corresponding to the second detection level Vd2, at time T2', and then exceeds the reference voltage V1, which is set corresponding to the first detection level Vd1, at time T1.

Thus, the output C2 of the second comparator 10 changes from the low level to the high level at time T2', and its inverted signal C3 changes from the high level to the low level. Then, at time T1, the output C1 of the first comparator 9 changes from the low level to the high level.

As a result, the output C4 of the SR flip-flop 14, which receives the outputs C1 and C3 as its S and R inputs, respectively, changes from the low level to the high level at time T1. The output C4 of the monostable multivibrator 15 is kept at the low level until the output C4 of the SR flip-flop 14 begins to drop from the high level to the low level.

When the interelectrode voltage Vw reaches the value substantially equal to the sub-power source voltage Vs1, the increase of the interelectrode voltage stops. However, since the sub-power source voltage Vs1 is set at a value large enough to start electric discharge between the electrodes, dielectric breakdown occurs between the electrodes to start electric discharge soon, and the interelectrode voltage Vw and the voltage Vwd obtained by dividing the voltage Vw start to drop. When the interelectrode voltage drops, in contrast with the case where it increases, Vwd first falls below the reference voltage V1 at time T1', and then falls below the reference voltage V2 at time T2.

Accordingly, the output C1 of the first comparator 9, having been kept at the high level from time T1 on, changes to the low level at time T1'. Also, the output C2 of the second comparator 10, having been kept at the high level from time T2' on, changes to the low level at time T2, and its inverted signal C3 changes from the low level to the high level at time T2.

As a result, the output C4 of the SR flip-flop 14 is set to a high level from a low level at time T1 and remains at this high-level until time T2 at which it is set to a low level. The monostable multivibrator 15 detects this trailing edge of C4, generates the pulse output C5 with the fixed duration, and delivers it as the electric discharge start detection signal to the control unit. On receiving the signal C5, the control unit immediately turns off the switching device 3, and turns on the switching device 4, thereby switching the sub-power source 1 over to the main power source 2. Thereupon, a main supply voltage for machining is applied between the electrodes, and one cycle of electric discharge machining for the workpiece 5 is executed.

In the case where the recovery of insulation between the electrodes is unsatisfactory in applying the sub-power source voltage, the sub-power source voltage application signal S1 is delivered from the control circuit to the switching device 3 to turn on the switching device. Thereupon, the interelectrode voltage Vw and the divided voltage Vwd start to increase. However, the interelectrode voltage Vw will not increase close to the sub-power source voltage Vs1 but increases, at the most, to a level just above the second detection level Vd2 which is set to be a little lower than the steady-state voltage Vch for electric discharge. That is, the interelectrode voltage Vw will not exceed the first detection level Vd1 which is sat at a value a little lower than the sub-power source voltage, and correspondingly, the divided voltage Vwd will not exceed the reference voltage V1 either, although it can exceeds the reference voltage V2. Thus, depending on the degree of insulation failure, some other current than the machining current is made to flow between the electrodes, so that the interelectrode voltage drops to a value lower than the value for electric discharge.

As a result, even though the output C2 of the second comparator 10 may temporarily change from the low level to the high level when the divided voltage Vwd exceeds the reference voltage V2, the output C1 of the first comparator 9 never changes to the high level, and remains at the low level from beginning to end. Accordingly, the SR flip-flop 14, which receives C1 as its S input, will not be set, so that the output C4 will not go high. If the output C4 will never go high, then the trailing edge of C4 will not be able to be detected either by the monostable multivibrator 15. Thus, the output C5 also remains at the low level, so that the electric discharge start detection signal is not delivered to the control unit, and the switchover to the main power source is not carried out.

As described in the section of the background art, it is undesirable that the switchover of the sub-power source to the main power source is left undone indefinitely in case of such insulation failure. So, if the electric discharge start detection signal C5 is not obtained within a predetermined period, it is advisable to suspend the application of the sub-power source voltage temporarily and execute control such that the sub-power source voltage application signal S1 is delivered again from the control unit after the passage of an off-time during which no voltage is applied between the electrodes. If the insulation between the electrodes is fully recovered when the sub-power source voltage is applied again after the off-time, various parts of the power supply apparatus naturally operate in the processes shown in FIG. 3a, and one cycle of electric discharge machining for the workpiece 5 is executed.

Moreover, it is also very advisable to make the first and second detection levels adjustable by using the reference voltage sources 11 and 12 with variable output voltages or by adopting variable resistors as the voltage dividing resistors 7 and 8, in order to cope with variation of the optimum values of the detection levels which depend on the machining conditions, etc.

According to the present invention, the threshold level for detecting the time of the interelectrode voltage increase after the application of the sub-power source voltage can be adjusted to a value suited for accurate discrimination of the state of recovery of insulation between the electrodes, and the threshold level for detecting the time of the interelectrode voltage drop can be adjusted to a value suited for accurate discrimination of the start of electric discharge. Accordingly, only the start of normal electric discharge caused after a satisfactory increase by the application of the sub-power source voltage can be detected securely, and the sub-power source can be switched to the main power source. Thus, the possibility of the adverse effect on the machining accuracy can be eliminated, which is caused by switchover to the main power source despite the incomplete recovery of insulation between electrodes when applying the voltage from the sub-power source.

By changing the threshold level for detecting the raise of the interelectrode voltage after applying the voltage from the sub-power source and the threshold level for detecting the drop of the interelectrode voltage, the function of detecting the start of normal electric discharge is not deteriorated even when the machining conditions are modified.

## Claims

1.  A power supply apparatus for an electric discharge machine, having a main power source (2) for applying a machining voltage between electrodes (5, 6), a subpower source (1) for applying electric discharge starting voltage between the electrodes (5, 6), an electric discharge start detecting circuit (7-15) for detecting a start of electric discharge occurring between the electrodes (5, 6) and outputting an electric discharge start detection signal (C5), and a power source switching circuit (3, 4) for switching the voltage application from said sub-power source (1) over to the voltage application from said main power source (2) in response to said electric discharge start detection signal (C5), wherein

    said electric discharge start detecting circuit (7-15) comprises interelectrode voltage increase detecting means (9) for detecting that the interelectrode voltage has become higher than a preset detection level as a result of the voltage application from said sub-power source (1), interelectrode voltage drop detecting means (10) for detecting that the interelectrode voltage has become lower than a preset detection level, and means for delivering an electric discharge detection signal (S1, S2) to said power source switching circuit (3, 4) when it is detected by said interelectrode voltage drop detecting means (10) that the interelectrode voltage has become lower than the associated detection level after it is detected by said interelectrode voltage increase detecting means (9) that the interelectrode voltage has become higher than its associated detection level;

    characterised in that the present detection level associated with the interelectrode voltage increase detecting means (9) is a first level, and the preset detection level associated with the interelectrode voltage drop detecting means (10) is a second level different from said first level.

2.  A power supply apparatus for an electric discharge machine according to claim 1, characterized in that at least one of said first and second detection levels is variable.

3.  A power supply apparatus for an electric discharge machine according to claim 1 or 2, characterized in that said first detection level is set to be higher than said second detection level.

4.  A power supply apparatus for an electric discharge machine according to claim 3, characterized in that said first detection level is set at a level a little lower than the voltage of said sub-power source (1), and said second detection level is set at a level a little higher than a steady-state voltage for electric discharge.

5.  A power supply apparatus for an electric discharge machine according to anyone of the preceding claims, characterized in that said electric discharge start detecting circuit (7-15) further includes a voltage dividing circuit (7, 8) for dividing the interelectrode voltage; said interelectrode voltage increase detecting means (9) includes a first comparator circuit for comparing a voltage divided by said voltage dividing circuit (7, 8) and a first reference voltage (V1); said interelectrode voltage drop detecting means (10) includes a second comparator circuit for comparing said divided voltage and a second reference voltage V2, and an inverter circuit (13) is connected to the output of said second comparator circuit; and said means for outputting the electric discharge detection signal (C5) includes a flip-flop (14) connected to said first comparator circuit and said inverter circuit (13), and a monostable multivibrator (15) connected to said flip-flop (14).

6.  A power supply apparatus for an electric discharge machine according to claim 5, characterized in that said first reference voltage (V1) corresponds to said first detection level, and said second reference voltage (V2) corresponds to said second detection level.

7.  A power supply apparatus for an electric discharge machine according to claim 5 or 6 when claim 5 is appended to claim 3 or 4, characterized in that said first reference voltage (V1) is set to be higher than said second reference voltage (V2).

## Patentansprüche

1.  Stromversorgungseinrichtung für eine elektrische Entladungsmaschine, die eine Hauptstromquelle (2) zum Legen einer Bearbeitungsspannung zwischen Elektroden (5, 6), eine Hilfsstromquelle (1) zum Legen einer Startspannung für die elektrische Entladung zwischen die Elektroden (5, 6), eine Starterfassungsschaltung (7 - 15) für die elektrische Entladung zum Erfassen eines Starts einer elektrischen Entladung, die zwischen den Elektroden (5, 6) auftritt, und Ausgeben eines Starterfassungssignals (C5) für die elektrische Entladung und eine Stromquellen-Umschalteinrichtung (3, 4) zum Umschalten der Spannungsanlegung aus der Hilfsstromquelle (1) zu der Spannungsanlegung aus der Hauptstromquelle (2) in Reaktion auf das Starterfassungssignal (C5) für die elektrische Entladung, wobei

    die Starterfassungsschaltung (7 - 15) für die elektrische Entladung umfaßt: ein Zwischenelektrodenspannungs-Anstiegserfassungsmittel (9) zum Erfassen, daß die Zwischenelektrodenspannung als Ergebnis der Spannungsanlegung aus der Hilfsstromquelle (1) höher als ein voreingestellter Erfassungspegel geworden ist, ein Zwischenelektrodenspannungs-Abfallerfasungsmittel (10) zum Erfassen, daß die Zwischenelektrodenspannung niedriger als ein voreingestellter Erfassungspegel geworden ist, und ein Mittel zum Liefern eines Erfassungssignals (S1, S2) für die elektrische Entladung an die Stromquellen-Umschalteinrichtung (3, 4), wenn durch das Zwischenelektrodenspannungs-Abfallerfassungsmittel 10) erfaßt ist, daß die Zwischenelektrodenspannung niedriger als der zugeordnete Erfassungspegel geworden ist, nachdem durch das Zwiscnenelektrodenspannungs-Anstiegserfassungsmittel (9) erfaßt ist, daß die Zwischenelektrodenspannung höher als ihr zugeordneter Erfassungspegel geworden ist,

dadurch **gekennzeichnet,** daß der voreingestellte Erfassungspegel, welcher dem Zwischenelektrodenspannungs-Anstiegserfassungsmittel (9) zugeordnet ist, ein erster Pegel ist und der voreingestellte Erfassungspegel, welcher dem Zwischenelektrodenspannungs-Abfallerfassungsmittel (10) zugeordnet ist, ein zweiter Pegel ist, der von dem ersten Pegel verschieden ist.

2. Stromversorgungseinrichtung für eine elektrische Entladungsmaschine nach Anspruch 1, dadurch **gekennzeichnet,** daß zumindest einer der ersten und zweiten Erfassungspegel variabel ist.

3. Stromversorgungseinrichtung für eine elektrische Entladungsmaschine nach Anspruch 1 oder 2, dadurch **gekennzeichnet,** daß der erste Erfassungspegel derart eingestellt ist, daß er höher als der zweite Erfassungspegel ist.

4. Stromversorgungseinrichtung für eine elektrische Entladungsmaschine nach Anspruch 3, dadurch **gekennzeichnet,** daß der erste Erfassungspegel auf einen Pegel eingestellt ist, der geringfügig niedriger als die Spannung der Hilfsstromquelle (1) ist, und der zweite Erfassungspegel auf einen Pegel eingestellt ist, der geringfügig höher als eine Stationärzustandsspannung für die elektrische Entladung ist.

5. Stromversorgungseinrichtung für eine elektrische Entladungsmaschine nach einem der vorhergehenden Ansprüche, dadurch **gekennzeichnet,** daß

die Starterfassungsschaltung (7 - 15) für die elektrische Entladung ferner eine Spannungsteilerschaltung (7, 8) zum Teilen der Zwischenelektrodenspannung enthält,
das Zwischenelektrodenspannungs-Anstiegserfassungsmittel (9) eine erste Komparatorschaltung zum Vergleichen einer Spannung, die sich durch Teilung mittels der Spannungsteilerschaltung (7, 8) ergibt, und einer ersten Referenzspannung (V1) enthält,
das Zwischenelektrodenspannungs-Abfallerfassungsmittel (10) eine zweite Komparatorschaltung zum Vergleichen der geteilten Spannung und einer zweiten Referenzspannung (V2) enthält,
eine Inverterschaltung (13) mit dem Ausgang der zweiten Komparatorschaltung verbunden ist und
das Mittel zum Ausgeben des Erfassungssignals (C5) für die elektrische Entladung ein Flipflop (14), das mit der ersten Komparatorschaltung und der Inverterschaltung (13) verbunden ist, und einen monostabilen Multivibrator (15), der mit dem Flipflop (14) verbunden ist, enthält.

6. Stromversorgungseinrichtung für eine elektrische Entladungsmaschine nach Anspruch 5, dadurch **gekennzeichnet,** daß die erste Referenzspannung (V1) dem ersten Erfassungspegel entspricht und die zweite Referenzspannung (V2) dem zweiten Erfassungspegel entspricht.

7. Stromversorgungseinrichtung für eine elektrische Entladungsmaschine nach Anspruch 5 oder 6, wenn Anspruch 5 auf Anspruch 3 oder 4 rückbezogen ist, dadurch **gekennzeichnet,** daß die erste Referenzspannung (V1) derart eingestellt ist, daß sie höher als die zweite Referenzspannung (V2) ist.

**Revendications**

1. Appareil d'alimentation en courant pour une machine d'usinage par étincelage, possédant une source de courant principale (2) pour appliquer une tension d'usinage entre des électrodes (5, 6), une source de courant auxiliaire (1) pour appliquer une tension de démarrage de l'étincelage entre les électrodes (5, 6), un circuit de détection (7-15) du démarrage de l'étincelage pour détecter le démarrage de l'étincelage se produisant entre les électrodes (5, 6) et pour émettre un signal de détection (C5) d'un démarrage de l'étincelage, et un circuit de commutation de source de courant (3, 4) pour passer d'une application de tension provenant de ladite source de courant auxiliaire (1) à une application de tension provenant de ladite source de courant principale (2) en réponse audit signal de détection (C5) d'un démarrage de l'étincelage, dans lequel

ledit circuit de détection (7-15) d'un démarrage de l'étincelage comprend un moyen de détection (9) d'une augmentation de tension entre les électrodes pour détecter le fait que la tension entre les électrodes s'est élevée pour atteindre une valeur supérieure au niveau de détection préréglé, suite à l'application d'une tension provenant de ladite source auxiliaire de courant (1), un moyen de détection (10) d'une chute de la tension entre les électrodes pour détecter le fait que la tension entre les électrodes a diminué pour atteindre une valeur inférieure à un niveau de détection préréglé, et un moyen pour envoyer un signal de détection d'un usinage par étincelage (S1, S2) audit circuit de commutation de source de courant (3, 4) lorsque ledit moyen de détection (10) d'une chute de tension entre les électrodes détecte le fait que la tension entre les électrodes a diminué pour atteindre une valeur inférieure au niveau de détection associé après que le moyen de détection (9) d'une augmentation de la tension entre les électrodes a détecté le fait que la tension entre les électrodes a augmenté pour atteindre une valeur supérieure à son niveau de détection associé;

caractérisé en ce que le niveau de détection préréglé, associé au moyen de détection (9) d'une augmentation de la tension entre les électrodes est un premier niveau et le niveau de détection préréglé, associé au moyen de détection (10) d'une chute de tension entre les électrodes est un second niveau différent dudit premier niveau.

2. Appareil d'alimentation en courant pour une machine d'usinage par étincelage selon la revendication 1, caractérisé en ce qu'au moins un desdits premier et second niveaux de détection est variable.

3. Appareil d'alimentation en courant pour une machine d'usinage par étincelage selon la revendication 1 ou 2, caractérisé en ce que ledit premier niveau de détection est réglé pour être supérieur audit second niveau de détection.

4. Appareil d'alimentation en courant pour une machine d'usinage par étincelage selon la revendication 3, caractérisé en ce que ledit premier niveau de détection est réglé à un niveau légèrement inférieur à la tension de ladite source auxiliaire de courant (1) et ledit second niveau de détection est réglé à un niveau légèrement supérieur à une tension en régime permanent pour un usinage par étincelage.

5. Appareil d'alimentation en courant pour une machine d'usinage par étincelage selon l'une quelconque des revendications précédentes, caractérisé en ce que ledit circuit de détection (7-15) d'un démarrage d'un usinage par étincelage englobe en outre un circuit de division de tension (7, 8) pour diviser la tension entre les électrodes; ledit moyen de détection (9) d'augmentation de la tension entre les électrodes englobe un premier comparateur pour comparer une tension divisée par ledit circuit de division de tension (7, 8) et une première tension de référence (V1); ledit moyen de détection (10) d'une chute de tension entre les électrodes englobe un second comparateur pour comparer ladite tension divisée et une seconde tension de référence (V2); et un onduleur (13) est relié à la sortie dudit second comparateur; ledit moyen pour émettre le signal de détection (C5) d'un usinage par étincelage englobe une bascule (14) reliée audit premier comparateur et audit onduleur (13), et un multivibrateur monostable (15) relié à ladite bascule (14).

6. Appareil d'alimentation en courant pour une machine d'usinage par étincelage selon la revendication 5, caractérisé en ce que ladite première tension de référence (V1) correspond audit premier niveau de détection et ladite seconde tension de référence (V2) correspond audit second niveau de détection.

7. Appareil d'alimentation en courant pour une machine d'usinage par étincelage selon la revendication 5 ou 6 lorsque la revendication 5 dépend de la revendication 3 ou 4, caractérisé en ce que ladite première tension de référence (V1) est réglée pour être supérieure à ladite seconde tension de référence (V2).

FIG. 1

Vw (INTERELECTRODE VOLTAGE)

Vud

T0 Tup          Tdw      TIME

FIG. 2

FIG. 3a

FIG. 3b